# EUROPEAN PATENT SPECIFICATION

(11) **EP 4 580 898 B1**
(45) Date of publication and mention of the grant of the patent: **01.07.2026**
(21) Application number: 23765198.9
(22) Date of filing: 31.08.2023
(51) Int. Cl.: B60K 1/02

(54) **POWERTRAIN**
ANTRIEBSSTRANG
GROUPE MOTOPROPULSEUR

(30) Priority: 02.09.2022 NO 20220951
(43) Date of publication of application: 09.07.2025
(73) Proprietor: Brudeli Green Mobility AS, 3302 Hokksund (NO)
(72) Inventor: BJØRKGÅRD, Sven, 3610 Kongsberg (NO); VESTGÅRD, Bård, 3400 Lier (NO); BRUDELI, Geir, 3300 HOKKSUND (NO)
(74) Representative: Acapo Onsagers AS
(86) International application number: PCT/EP2023/073953
(87) International publication number: WO 2024/047189

(56) References cited:
- CN-A- 103 072 472
- CN-B- 112 805 170
- DE-A1- 102011 005 451
- DE-A1- 102015 206 190
- US-A1- 2021 008 969

## Description

### Field of the invention

The present invention relates to an electric powertrain for vehicles, in particular an e-axle.

### Background

The present invention provides a new and improved electric powertrain. The electric powertrain may also be termed an electric axle or e-axle. In an e-axle, the electric motor(s), power electronics and transmission are commonly combined in a compact unit directly powering the vehicle's wheel drive axle.

The electric powertrain of the present invention is intended for trucks and large vehicles including long haul trucks covering long yearly distances, with the aim of reducing the total cost of ownership of operating those vehicles. Compared to electric passenger cars such trucks will have at least ten times the weight and driving distance, leading to an energy consumption per year which is much higher, hence an optimized electric powertrain should have the overall energy efficiency as the highest priority.

As a result of the high weight of the vehicle a very high drive torque is needed at the wheels to have enough gradeability. On the other hand, a long-haul vehicle spends most of the time at high speeds with moderate wheel torque need. To make this combination in an efficient way, a combination of relatively small electric motors and a transmission that can offer various gear ratios is beneficial. It can be calculated that for application in long-haul vehicles three gears are preferred to make sure the electric motors always operate efficiently. Those gears should preferably be shifted without torque interruption.

Further the energy efficiency of the electric drivetrain is of particular importance for the optimal sizing of the batteries. Trucks may have batteries of around 1000 kwh and a 1% efficiency increase can reduce the battery size by 10 kwh.

Various prior art solutions for electric powertrains are known.

WO2021121604A1 (Volvo) discloses an electric axle for trucks featuring two electric motors. Each of the two electric motors may be connected to the driven wheels at two different ratios via a differential. The final torque increase before entering the differential happens over a single tooth mesh, this means this gear needs to be very wide to cope with the torque and have a sufficient lifetime. The two motors are shown installed transversely after each other in the vehicle which may in some applications be difficult to find enough space for. Further, the higher gear requires multiple gear steps leading to decreased power efficiency. Yet another disadvantage is that both motors does not have access to the lowest gear, meaning gradeability is lower than what it could have been.

WO2018156676A2 (Dana) discloses an electric axle featuring two electric motors and a planetary gear. One electric motor is driving the sun gear while the other is driving the ring gear. The carrier is transferring the combined torque from the two motors multiplied with the inherent ratio to the differential. It is further shown a variant of the electric axle having a high gear and a low gear between the electric motors and the planetary gear. A disadvantage of the disclosed solution is that the higher gear requires multiple and same number of gear steps as the lower gears leading to decreased power efficiency, especially for a long-haul vehicle spending a lot of time in higher gears. Yet another disadvantage is that both motors does not have access to the lowest gear, which is the through the sun gear, meaning gradeability is lower than what it could have been. Yet another disadvantage is that the solution with high and low gear is shown with the selectable gears transversely after each other in the vehicle which may in some applications be difficult to find enough space for.

US10384536B2 (Nio) discloses an electric axle featuring two electric motors and a planetary gear. The main function of the planetary gear is to produce the startup torque that is provided by only one of the two motors. The transmission does not provide more than two gears.

DE102011005451, CN 103072472, DE102015206190 disclose electric axles featuring two electric motors. Both electric motors may transfer torque to a wheel axle via four different torque paths, each torque path providing a different gear ratio. The electric axles may shift between the torque paths without loss of torque to the driven wheels, i.e. provides powershift between the 4 gear ratios. The axial length of the electric axles is not configured to fit into a truck, and the higher gear requires multiple gear steps leading to decreased power efficiency.

WO2020020441 (Volvo) discloses an electric axle featuring two electric motors and two planetary gears. The electric axle does not provide at least 3 gears to make sure the electric motors always operate efficiently.

The prior art electric axles have various disadvantages, particularly when used in trucks and larger vehicles including long haul trucks.

The goal of the present invention is to provide an improved electric powertrain or axle in which at least some of the disadvantages of the prior art electric axles are avoided or alleviated.

### Summary of the invention

The present invention is defined by the appended claims and in the following:
In a first aspect, the present invention provides a powertrain comprising a first electric motor, a second electric motor, a transmission assembly, a planetary gear and a wheel drive axle, wherein
the transmission assembly comprises a first input connected to the first electric motor, a second input connected to the second electric motor, and at least a first output to which both the first electric motor and the second electric motor may provide torque, wherein
   the first input is connectable to the first output by a plurality of gear sets being selectable by a first clutch assembly, and
   the second input is connectable to the first output by a plurality of gear sets being selectable by a second clutch assembly, to provide at least two gear ratios between the first output and each of the first input and the second input, wherein the gear sets and clutch assemblies are configured to allow a change between the two gear ratios without torque interrupt; and
the planetary gear comprises a sun gear, a ring gear and a carrier, the carrier is connected to the wheel drive axle and the planetary gear is shiftable between a first gear state, a second gear state and a third gear state, in the first gear state the ring gear is kept rotationally stationary to provide a highest possible inherent gear ratio between the carrier and the sun gear, in the second gear state a rotational speed of the ring gear depends on the rotation of both the sun gear and the carrier, and in the third gear state any two of the ring gear, the sun gear and the carrier are kept rotationally constant to each other to provide a 1:1 gear ratio between the sun gear and the carrier; and
the first output of the transmission assembly is coupled to the sun gear.

The first output may be a shaft or gear connected to, or forming an integral part of, the sun gear. In other words, any torque applied to the first output is directly transferred to the sun gear.

The gear sets and clutch assemblies are configured to allow a change between the two gear ratios without torque interruption at the output shaft.

The first output is coupled to the sun gear such that torque provided to the first output may be transferred to the sun gear.

The gear sets and clutch assemblies are configured to allow a change between the two gear ratios without torque interruption at the output shaft.

The carrier is connected to the wheel drive axle to transfer torque between the carrier and the wheel drive axle.

The second gear state may also be defined as a gear state in which the ring gear may rotate, and any rotation is at least controlled by rotation of the sun gear and the carrier.

In other words, the plurality of gear sets, the first clutch assembly and the second clutch assembly provide at least two gear ratios between the first output and each of the first input and the second input.

The plurality of gear sets connecting the first input to the first output may comprise different gear sets than, the same gear sets as, or a duplicate of, the plurality of gear sets connecting the second input to the first output.

The plurality of gear sets connecting the first input to the first output and the plurality of gear sets connecting the second input to the first output may be the same gear sets, different gear sets, or be duplicate gear sets.

Any of the two gear ratios between the first output and the first input may be the same as or different than the two gear ratios between the first output and the second input.

The two gear ratios between the first input and the first output may be identical or different from the two gear ratios between the second input and the first output.

The plurality of gear sets connecting the first input to the first output may be termed a first plurality of gear sets and the plurality of gear sets connecting the second input to the first output may be termed a second plurality of gear sets. The first plurality of gear sets may comprise the same gear sets as the second plurality of gear sets, the first plurality of gear sets may be a duplicate set of gears being identical to the second plurality of gear sets, or the first plurality of gear sets may be different from the second plurality of gear sets.

The first electric motor and the second electric motor may be the same or different depending on desired characteristics and properties of the powertrain.

In an embodiment of the powertrain, the transmission assembly may comprise a second output that may be coupled to the second electric motor, the second output being connectable to the ring gear or the carrier. In other words, the transmission assembly comprises a second output to which the second electric motor may transfer torque.

In an embodiment of the powertrain, the transmission assembly may comprise a third clutch assembly configured to couple the second output and the second electric motor such that torque and rotation may be transferred from the second electric motor to the ring gear or the carrier.

In an embodiment, the powertrain may comprise a planetary clutch for controlling a shift between the first gear state, the second gear state and the third gear state.

The planetary clutch may be of a friction type able to gradually control the shift between the gear states or a clutch with distinct positions that lock the gear states when they are achieved, e.g. a dog clutch.

In an embodiment of the powertrain, a shift between the first gear state, the second gear state and the third gear state may be controlled through torque and speed applied to the sun gear through the first output and to the ring gear through the second output.

In an embodiment of the powertrain, any of the second clutch assembly and the third clutch assembly is configured to selectively disconnect the second electric motor from the first output.

In an embodiment of the powertrain, the first electric motor and the second electric motor may be decoupled from the first output by operating the first clutch assembly and the second clutch assembly, respectively.

In an embodiment of the powertrain, the carrier and the wheel drive axle may be co-axial. In other words, a centreline of the planetary gear may be colinear with the centreline of the wheel drive axle.

In an embodiment of the powertrain, the first electric motor and the second electric motor may comprise a first drive shaft and a second drive shaft, respectively, the first and second drive shafts are parallel and positioned on opposite sides of a centreline of the planetary gear. The first and second drive shafts are parallel and may be positioned on opposite sides of a vertical plane containing the centreline of the planetary gear.

In an embodiment of the powertrain, the first input may be operably connectable to the sun gear via any of a first torque path and a second torque path, and the second input may be operably connectable to the sun gear via any of a third torque path and a fourth torque path. Each torque path may comprise at least one gear set and the first clutch assembly or the second clutch assembly.

In other words, the transmission assembly may comprise a first, second, third and fourth torque path.

In an embodiment of the powertrain, the second input may be operably connectable to the ring gear or the carrier via a fifth torque path. The fifth torque path may comprise at least one gear set and the third clutch assembly.

In an embodiment of the powertrain, the first, second, third and fourth torque paths may be operably connectable to the sun gear via a common gear, i.e. via a gear wheel being common for all four torque paths. The common gear wheel may be fixed to or form an integral part of the sun gear.

In an embodiment of the powertrain, the carrier may be connected to the wheel drive axle via a differential.

In a second aspect, the present disclosure provides a method of shifting between the first gear state and the third gear state of the planetary gear of the powertrain according to the first aspect while providing torque to the wheel drive axle, the transmission assembly of the powertrain comprises a second output coupled to the second electric motor, the second output being connectable to the ring gear or the carrier by a third clutch assembly, the method comprises the steps of:
- providing torque from the first and the second motor to the sun gear via the first gear set and the second gear set, respectively, while having the planetary gear in the first gear state;
- decreasing power from the second motor while increasing power from the first motor to compensate for loss of torque to the wheel drive axle;
- operating the second clutch assembly to decouple the second motor from the sun gear;
- connecting the second electric motor to the ring gear, e.g. by operating the third clutch assembly;
- applying torque from the second electric motor to the ring gear, the applied torque being equal to a holding torque of the ring gear;
- shifting the planetary gear to the second gear state by operating a planetary clutch;
- increasing the rotational speed of the ring gear by applying torque from the second motor and reducing the rotational speed of the first motor while the rotational speed of the carrier is maintained; and
- shifting the planetary gear to the third gear state when the rotational speeds of the ring gear and the sun gear are equal.

In an embodiment, the method according to the second aspect comprises a step of:
- decreasing power from the second motor while increasing power from the first motor to compensate for loss of torque to the wheel drive axle;
- disconnecting the second motor from the ring gear by operating the third clutch assembly; and
- operating the second clutch assembly to couple the second motor to the sun gear.

In a third aspect, the present invention provides a vehicle comprising a powertrain according to any embodiment of the first aspect.

In a fourth aspect, the present disclosure provides a powertrain comprising a first electric motor, a second electric motor, a transmission assembly, a planetary gear and a wheel drive axle, wherein
the transmission assembly comprises a first input connected to the first electric motor, a second input connected to the second electric motor, a first output to which both the first electric motor and the second electric motor may provide torque, and a second output,
the first input may be connected to the first output by at least a first gear set, and the second input may be connected to the first output by at least a second gear set and at least one clutch, to provide at least one gear ratio between the first output and each of the first input and the second input; and
the planetary gear comprises a sun gear, a ring gear and a carrier, the carrier is connected to the wheel drive axle and the planetary gear is shiftable between a first gear state, a second gear state and a third gear state, in the first gear state the ring gear is kept rotationally stationary to provide a highest possible inherent gear ratio between the carrier and the sun gear, in the second gear state a rotational speed of the carrier depends on the rotation of both the sun gear and the ring gear, and in the third gear state any two of the ring gear, the sun gear and the carrier are kept rotationally constant to
each other to provide a 1:1 gear ratio between the sun gear and the carrier; and
the first output of the transmission assembly is coupled to the sun gear, and the second output is coupled to the second electric motor and is connectable to the ring gear or the carrier.

The first and second gear sets may be the same, duplicates, or different.

In an embodiment of the powertrain according to the fourth aspect, the transmission assembly may comprise a clutch assembly configured to couple the second output and the second electric motor such that torque and rotation may be transferred from the second electric motor to the ring gear or the carrier.

In an embodiment, the powertrain according to the fourth aspect may comprise a planetary clutch for controlling a shift between the first gear state, the second gear state and the third gear state.

The planetary clutch may be of a friction type able to gradually control the shift between the gear states or a clutch with distinct positions that lock the gear states when they are achieved, e.g. a dog clutch.

In an embodiment of the powertrain according to the fourth aspect, a shift between the first gear state, the second gear state and the third gear state may be controlled through torque and speed applied to the sun gear through the first output and to the ring gear through the second output.

In an embodiment of the powertrain according to the fourth aspect, the clutch is configured to selectively disconnect the second electric motor from the first output.

In a fifth aspect, the present disclosure provides a method of shifting between the first gear state and the third gear state of the planetary gear while providing torque to the wheel drive axle, the method comprises the steps of:
- providing torque from the first and the second motor to the sun gear via the first gear set and the second gear set, respectively, while having the planetary gear in the first gear state;
- decreasing power from the second motor while increasing power from the first motor to compensate for loss of torque to the wheel drive axle;
- operating the clutch to decouple the second motor from the sun gear;
- connecting the second electric motor to the ring gear, e.g. by operating the clutch assembly;
- applying torque from the second electric motor to the ring gear, the applied torque being equal to a holding torque of the ring gear;
- shifting the planetary gear to the second gear state by operating a planetary clutch;
- increasing the rotational speed of the ring gear by applying torque from the second motor and reducing the rotational speed of the first motor while the rotational speed of the carrier is maintained; and
- shifting the planetary gear to the third gear state when the rotational speeds of the ring gear and the sun gear are equal.

In an embodiment, the method according to the fifth aspect comprises a step of:
- decreasing power from the second motor while increasing power from the first motor to compensate for loss of torque to the wheel drive axle;
- disconnecting the second motor from the ring gear, e.g. by operating the clutch assembly; and
- operating the clutch to couple the second motor to the sun gear.

In a sixth aspect, the present invention provides a method of shifting gears in a powertrain according to any embodiment of the first and/or fourth aspect, the method comprises the steps of:
- opening a first clutch (i.e. at least one clutch of the first clutch assembly) in a complete torque path extending from the first motor to the wheel drive axle to decouple an initially connected first gear (e.g. a first gear set of a plurality of gear sets);
- adjusting rpm of the first motor so that the rpm fits a second (or next) gear (e.g. a second gear set of a plurality of gear sets) connected to the first clutch;
- closing the first clutch to connect the second gear to the first motor;
- opening a second clutch (i.e. at least one clutch of the second clutch assembly) in a complete torque path extending from the second motor to the wheel drive axle to decouple an initially connected first gear (e.g. a first gear set of a plurality of gear sets, may be the same or different gear set from the first gear set connectable to the first motor);
- adjusting rpm of the second motor so that the rpm fits a second gear (e.g. a gear set of a plurality of gear sets, may be the same or different gear set from the second gear set connected to the first motor) connected to the second clutch; and
- closing the second clutch to connect the second gear to the second motor.

The term "torque path" is intended to mean a mechanical power transmission configured to transfer torque from a torque input to a torque output...

### Description of the drawings

Embodiments of the invention is described in detail by reference to the following drawings:
- Figs. 1a/1b: show a stick diagram and a block diagram of a first exemplary powertrain according to the invention.
- Figs. 1c-1g: show a sequence of gear shift for the first exemplary powertrain according to the invention
- Figs. 2a/2b: show a stick diagram and a block diagram of a second exemplary powertrain according to the invention.
- Figs. 3a/3b: show a stick diagram and a block diagram of a third exemplary powertrain according to the invention.
- Figs. 4a/4b: show a stick diagram and a block diagram of a fourth exemplary powertrain according to the invention.
- Figs. 5a/5b: show a stick diagram and a block diagram of a fifth exemplary powertrain.
- Fig. 6a/6b: show a stick diagram and a block diagram of a sixth exemplary powertrain according to the invention.
- Fig. 7: shows a stick diagram of a seventh exemplary powertrain according to the invention.
- Fig. 8: shows a block diagram of the exemplary powertrains shown in fig. 7.
- Figs. 9-19: show perspective and sectional views of the exemplary powertrain illustrated in fig. 8.

### Detailed description of embodiments of the invention

As described above, an electric powertrain for trucks should preferably have at least three different gear ratios to transfer torque and rotation from the electric motors to the driven wheels. At least the two highest gear steps (i.e. the gear steps providing the two lowest gear ratios) should have a powershift solution, i.e. a solution where torque can be transferred to the driven wheels while a gear ratio is shifted.

The present invention provides an electric powertrain suitable for use in trucks by having two electric motors connected to a planetary gear via a transmission assembly. The transmission assembly is configured to provide at least two different gear ratios between each of the electric motors and a sun gear of the planetary gear. The transmission assembly is configured such that a shift between the two gear ratios may occur without loss of torque.

Transmission assemblies configured to provide at least two different gear ratios without loss of torque are known to the skilled person and disclosed in e.g. DE102011005451, CN 103072472 and DE102015206190.

To obtain the necessary total gear ratios between the two electric motors and a wheel drive axle several gear steps are required.

The transmission assembly is required since the two electric motors should preferably have more than two gear ratios to provide the maximum mechanical power and efficiency for all combinations of vehicle speed and wheel torque demand.

A final gear step, that is where an output is connected directly to the wheel drive axle, will have a very high torque. For use in the final gear step, the planetary gear will have several advantageous properties including a very compact size and especially short axial build length. The planetary gear of the inventive powertrain provides further advantages by being shiftable to run in at least a low-speed gear state and a high-speed gear state, i.e. may provide two different gear ratios between the sun gear and a carrier. In the low-speed gear state, torque is transferred from the sun gear to the carrier via rotating planet gears. By locking a ring gear to ground, high torque and lower speed are obtained at the wheel drive axle. The sun gear, the ring gear and the carrier are in constant mesh with each other via the rotating planet gears. In the high-speed gear state, the sun gear and the carrier are fixed relative to each other in a 1:1 gear ratio by locking any two of the sun gear, the carrier and the ring gear to each other. The high-speed gear state provides low torque and higher speed at the wheel drive axle. Thus, when the planetary gear is in the high-speed gear state, mechanical power loss in this gear step is minimized to increase power efficiency of a vehicle running in the higher gears.

The following disclosure describes exemplary embodiments of an electrically driven powertrain according to the invention. For ease of understanding, the embodiments are illustrated by use of paired stick diagrams and block diagrams. All embodiments have the same functionality as described above.

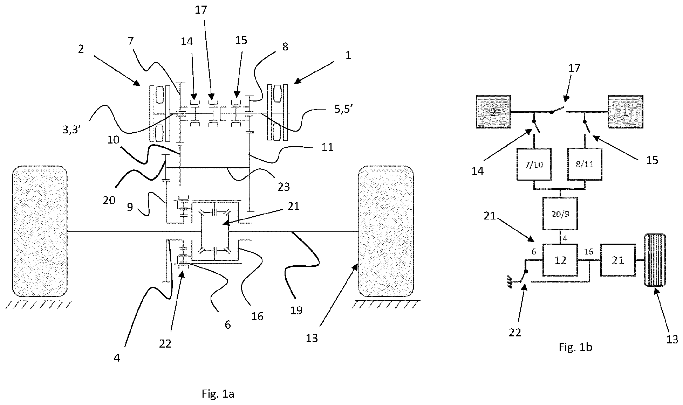

A first exemplary electric powertrain according to the invention is shown in figs. 1a and 1b (fig. a/b).

The inventive electric powertrain, i.e. e-axle, features a first electric motor 1, a second electric motor 2, a transmission assembly and a planetary gear 12. The planetary gear comprises a sun gear 4, a ring gear 6 and a carrier 16. The electric motors 1,2 are connected to the sun gear 4 of the planetary gear 12 via the transmission assembly. The transmission assembly has a first gear set 7,10, a second gear set 8,11, a first clutch 14, a second clutch 15 and a third clutch 17 (i.e. a plurality of clutches) and is configured to achieve sufficient torque at the sun gear 4. The first gear set and the second gear set, in combination with a third gear set 9,20, provides a first gear ratio and a second gear ratio, respectively, between the electric motors 1,2 and the sun gear 4. Switching between first and second gear ratios may be performed while propulsion torque to the sun gear 4, and consequently the wheel drive axle 19 and the drive wheels 13, is maintained. The transmission assembly provides two torque paths, i.e. a torque path for each of the gear ratios, between each of the first and second electric motor.

A first torque path connects the first electric motor 1 to the sun gear 4 via the second gear set 8,11 and the second clutch 15. A second torque path connects the first electric motor 1 to the sun gear 4 via the first gear set 7,10, the first clutch 14 and the third clutch 17. A third torque path connects the second electric motor 2 to the sun gear 4 via the second gear set 8,11, the second clutch 15 and the third clutch 17. A fourth torque path connects the second electric motor 2 to the sun gear 4 via the first gear set 7,10 and the first clutch 14.

The last torque increase occurs in the planetary gear 12 connected to the drive wheels 13 via a differential 21. In this manner the last torque increase does not work between shafts in the gearbox housing. The planetary gear 12 is shiftable via a clutch 22 (i.e. a planetary clutch) to provide a third gear ratio for low gearing (i.e. low-speed gear state) and a fourth gear ratio for high gearing (i.e. high-speed gear state) between the sun gear 4 and the differential 21. The third gear ratio is commonly between 4:1 and 3:1, and the fourth gear ratio is 1:1. The planetary gear 12 is integrated with the differential 21 via the shared carrier 16, with the latter typically also functioning as the housing of the differential.

Consequently, the first exemplary powertrain provides a total of four gears, two low-gears and two high-gears. Shifting between each of the two low-gears and each of the two high-gears may be performed without loss of torque to the drive wheels 13, also called powershift. Powershift between the two high gears is highly advantageous since they are used to the greatest extent. The low gears are used in less common situations, for example when a vehicle is going up an abnormally steep hill, typically over 10% ascent. Thus, a gear shift without torque interruption between the two high gears will suffice for most driving situations.

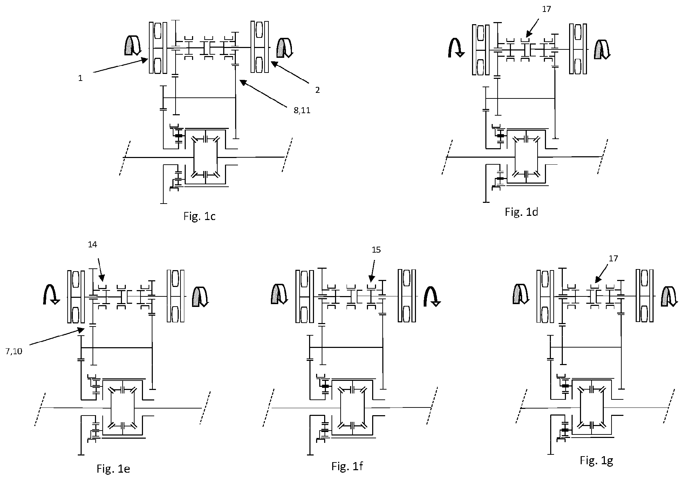

Powershift between the two high-gears (i.e. between the first gear ratio and the second gear ratio when the planetary gear runs in the fourth gear ratio) is done by the following sequence illustrated in figs. 1c-1g.

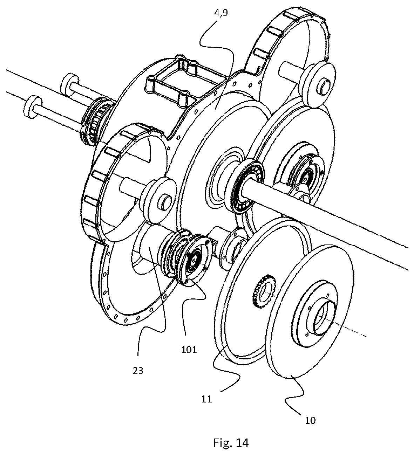

The sequence starts with a situation wherein a vehicle drives at a steady speed at the highest gear (i.e. a combination of the second gear ratio in the transmission assembly and the fourth gear ratio in the planetary gear):
- initially, both the first motor 1 and the second motor 2 are interconnected and the second gear set 8,11 is connected to the sun gear 4, both motors provide moderate power, see fig. 1c;
- a need to shift down to a lower gear occurs, e.g. a hill is approached;
- the first motor 1 reduces power and the second motor 2 increases power accordingly; as the first motor 1 reaches zero torque, the third clutch 17 between the two motors can be disconnected, see fig. 1d;
- the first motor 1 adapts its speed to a speed that will fit with the first gear set 7,10, see fig. 1e; when the speed is correct the first motor 1 is engaged to the first gear set 7,10 by the first clutch 14, torque from the first motor 1 is increased to the level provided before the gear shifting, while the second motor 2 reduces its power;
- when the second motor 2 reaches zero torque, see fig. 1f, the second gear set 8,11 is disconnected by the second clutch 15, the speed of the second motor 2 is adapted to the speed of the first motor 1; and
- when the speed is the same both motors can be reconnected by the third clutch 17, see fig. 1g (fig. 14) and both motors can return to moderate power.

A substantially reverse sequence may be applied when shifting from the lower of the two high-gears to the highest, i.e. shifting from the first gear set 7,10 to the second gear set 8,11.

The same sequences are also used when powershifting between the two low gears (i.e. shifting between the first gear ratio and the second gear ratio of the transmission assembly when the planetary gear runs in the third gear ratio).

If the vehicle needs a very high propulsion torque, one can select the lowest gear ratio (i.e. the third gear ratio) in the planetary gear 12. The gear ratios of the planetary gear are connected in series with the first gear ratio (of the first gear set 7,10) and the second gear ratio (of the second gear set 8,11) so that the ratios multiply. The high gearing in the planetary gear has a ratio of 1:1 while the low gearing is typically between 3 and 4, here we have chosen 3.2:1.

This means that when the high-gear series (a combination of the first or second gear ratio and the fourth gear ratio) is selected there are no gears in the planetary gear that rotate against another gear, i.e. everything rotates together so that friction loss is minimal and the power efficiency is optimal.

When the low-gear series (a combination of the first or second gear ratio and the third gear ratio) is selected, the ring gear 6 is locked to the planetary gear housing, the sun gear 4 is input, and the carrier 16 (also termed planetary carrier or holder) is outgoing.

In the exemplary embodiment shown in figs. 1a-1g, a gear shift between the third and fourth gear ratios, i.e. between the high series and low series of gears, will lead to a drive torque interruption since neither the first motor 1 nor the second motor 2 may provide torque to the sun gear 4 during the gear shift.

An advantage of having the last torque increase in the planetary gear 12, where the output (i.e. carrier 16) is connected directly to the wheel drive axle 19 or shaft is that this very high torque does not work to push shafts in the transmission assembly radially apart. A normal gear tooth engagement in which gears on corresponding shafts engage will, as a consequence of the force of the tooth interaction, create a counter force that tries to push the gears radially apart, thereby trying to bend the shafts on which the gears are fixed. This force must in turn be absorbed by the shaft bearings and is thus also transferred to a housing of the transmission assembly.

In a planetary gear, all these forces are internally balanced; the only forces emitted except for the forces to the wheels are the holding forces of the ring gear. However, the holding forces can be absorbed along the entire perimeter of the ring gear and exerts no forces on the housing.

The powertrain according to the invention provides gear shifts with reduced or even eliminated drive torque interruption, i.e. powershift, by using a transmission assembly based on the simplest forms of gears and shifting mechanisms combined with two electric motors. The transmission assembly is connected by a final gear step in the form of a shiftable planetary gear integrated with a differential. The final gear step provides a number of advantages over the prior art by having the planet gear and differential sharing one carrier, offering two different ratios with the most used ratio not having any internal rotation in the final gear step.

The clutches and shift sleeves 14,15,17 are mechanical connections for transferring rotation e.g. dog clutches. Such clutches are preferred due to low cost and low maintenance.

However, in alternative embodiments of the powertrain according to the invention other clutches may be used, such as any suitable type of friction clutches, wherein the transfer of torque is done by pushing at least two frictional surfaces against each other. The inventive powertrain may also comprise clutches according to other known clutch principles, such as:
- Friction type clutches combined with centrifugal operation;
- Clutches based on hydraulic principles (i.e. known as torque converter) where one rotating part sets another rotating part in rotation via a fluid (transmission oil);
- Clutches where viscosity in a fluid is changed by heat or magnetic properties for transferring of torque, and
- Any combinations of the above principles.

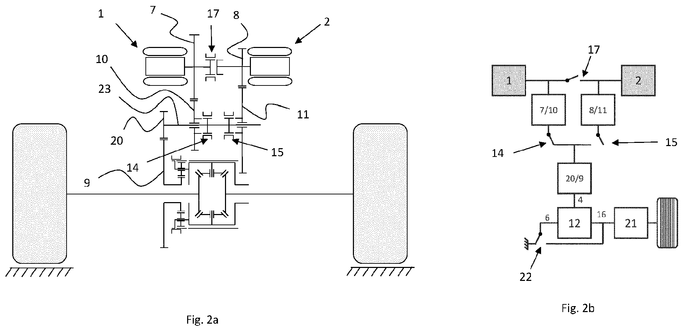

A second exemplary powertrain according to the invention is shown in figs. 2a and 2b.

The powertrain in figs. 2a and 2b has the same functionality as the first exemplary embodiment. The main difference lays in the configuration of the transmission assembly wherein the clutches corresponding to the first clutch 14 and the second clutch 15 have been moved to a countershaft 23 (i.e. an intermediate shaft) to shorten the axial length from end to end of the first motor 1 and the second motor 2. This dimension is important for packaging inside the frame rails of a truck.

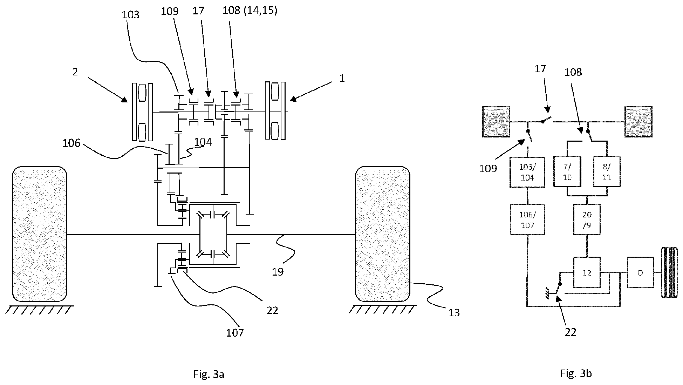

A third exemplary powertrain is shown in figs. 3a and 3b.

In view of the powertrain in fig. 1a, the third exemplary powertrain features an additional torque path (i.e. a fifth torque path) obtained by introducing two gear sets 103,104,106,107 and a clutch 109 (i.e. a shift sleeve). One of the gears 107 of the two gear sets may be considered a second output of the transmission assembly. The additional torque path is coupled to the shared carrier through which any of the first electric motor and the second electric motor can provide torque to the wheel drive axle 19 independent of the planetary gear. In this manner, torque may be applied to the wheel drive axle 19 and the wheels 13 during a shift of the planetary gear, or at other times as well. For instance, by applying torque to the wheels 13 during a shift between the third and fourth gear ratios of the planetary gear, i.e. shift between the high series and low series of gears, powershift between the two gear ratios of the planetary gear may be obtained.

The innovation is further improved by showing the opportunity to use the planet carrier to transfer the torque from the additional gear set. The shown solution will have a total of 5 speeds.

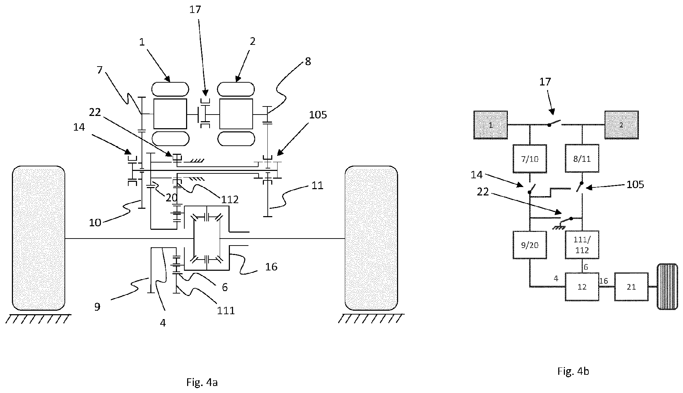

A fourth exemplary powertrain is shown in figs. 4a and 4b.

In view of the powertrain in fig. 1a, the fourth exemplary powertrain features an additional torque path obtained by introducing the gear set 111,112 and a clutch 105 (i.e. a shift sleeve), the clutch 105 is in this way replacing the clutch 15, with additional functionality. Via the clutch 105, the second electric motor 2 may selectively be coupled to the ring gear 6 or the sun gear 4. The second electric motor 2 may in this manner apply torque to the ring gear 6, the wheel drive axle 19 and the wheels during a shift of the planetary gear. The additional torque path may also apply torque at other times as well, such as where motor 1 can drive the sun gear and motor 2 drive the ring gear at various speeds to utilize the effect of using the planetary gear 12 as a variator where the carrier 16 speed will be a result of the sun gear 4 speed and ring gear 6 speed and the inherent ratio of the planetary gear 12. The clutch 22 is moved to sit around the intermediate shaft instead of being located concentric to the planetary gear, but it still has the functionality of either locking the ring gear 6 stationary by its interaction with gear 111 which now can be locked stationary, or the clutch 22 can lock the ring gear 6 to rotate with the sun gear 4 through the interaction respectively with gears 111 and 9/20 since gear 111 can be locked to gear 20 by the clutch 22. The additional torque path allows at least the second electric motor to couple to and drive the ring gear 6.

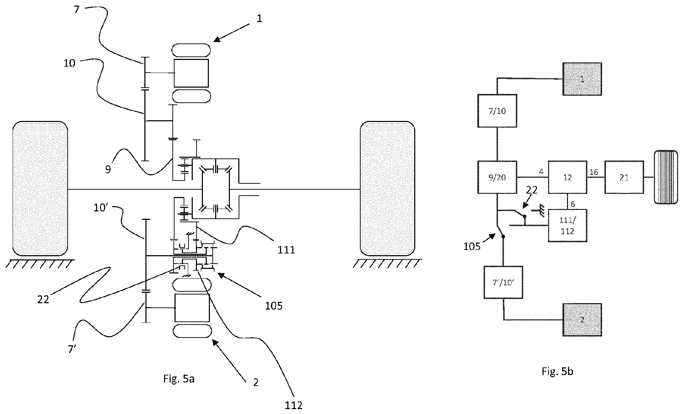

A fifth exemplary powertrain is shown in figs. 5a and 5b.

The fifth exemplary powertrain provides a layout wherein the second electric motor 2 is in front of the wheel drive axle 19 (when mounted to a vehicle) and the first electric motor is in the rear of the wheel drive axle 19. In other words, drive shafts of the first electric motor 1 and the second electric motor 1 are parallel and positioned on opposite sides of a centreline of the planetary gear. This layout is highly advantageous for vehicle packaging. Duplicate gear sets with similar functionality are marked with an apostrophe.

Contrary to the other exemplary powertrains described herein, the fifth exemplary powertrain does not feature a transmission assembly providing two shiftable gear ratios between the electric motors 1,2 and the sun gear of the planetary gear 12. Each of the electric motors 1,2 is coupled to the sun gear by a corresponding torque path. However, the second motor 2 (i.e. front motor) may be selectively coupled to the ring gear 6 via a clutch 105, a gear shift between the low gear and the high gear of the planetary gear by use of the clutch 22 may be performed without torque interrupt, i.e. powershift.

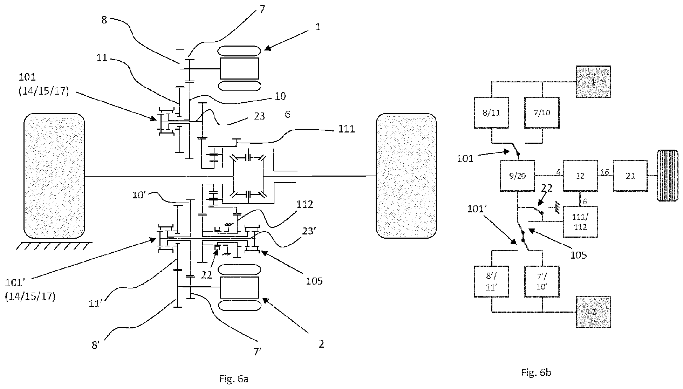

A sixth exemplary powertrain is shown in figs. 6a and 6b.

The layout of the sixth exemplary powertrain is similar to the layout of the powertrain in fig. 5 but comprises a shiftable transmission assembly in front of the planetary gear. The transmission assembly provides the same functionality as described in connection with fig. 1. The first motor 1 and the second motor 2 are arranged on opposites sides of the planetary gear 12. The transmission assembly is split in two halves having duplicate gear sets for providing a first gear ratio and a second gear ratio between the electric motors 1,2 and the sun gear 4. The functionality of the 2-position clutches/shift sleeves 14,15,17 in fig.1 is replaced by two 3-position shift sleeves 101,101'.

Although the number of gear sets are higher, the width of the gear sets is half the width of the corresponding gear sets of the first to fourth exemplary embodiments since only one motor applies torque to each of these gear sets. Consequently, material use is not much higher.

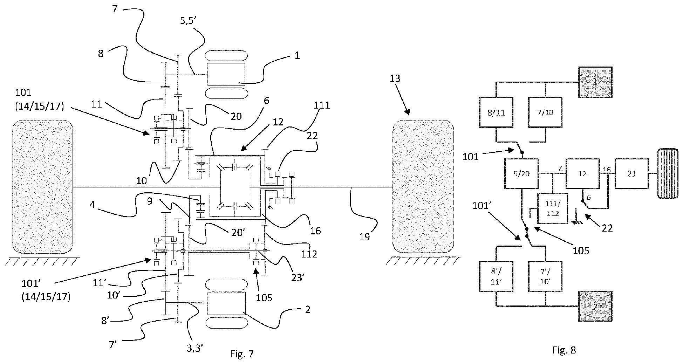

A seventh exemplary powertrain is shown in figs. 7 and 8.

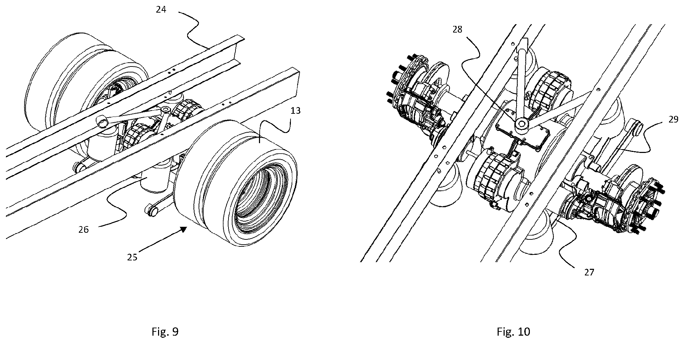

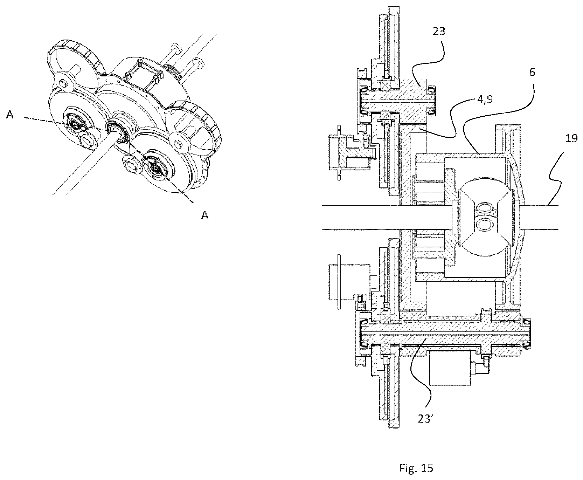

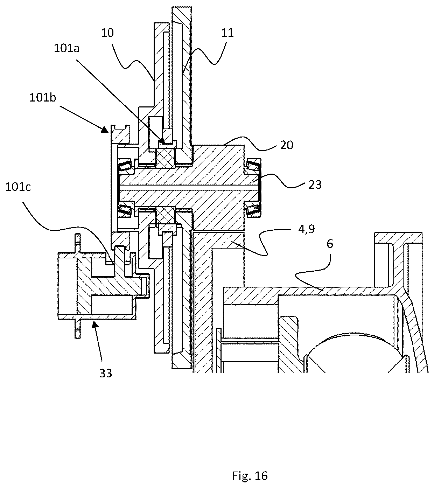

The seventh exemplary embodiment is substantially similar to the powertrain in fig. 6, featuring an alternative configuration of the intermediate shaft 23' and the shift sleeve assemblies 101,101'. In addition, the planetary clutch/shift sleeve 22 is moved to a position around the wheel drive axle 19. The latter positioning is advantageous since the planetary clutch 22 may be combined with a differential lock device, see description below in connection with figs. 9-18.

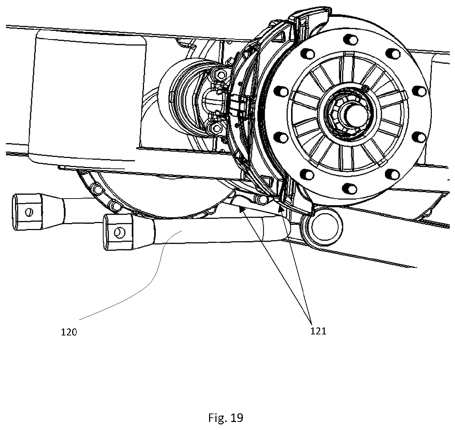

The seventh exemplary powertrain is described in detail below by reference to figs. 9-19.

In figs. 9-19, the seventh exemplary powertrain shown in fig. 7, herein termed an e-axle, is shown integrated in a truck as a rear driven axle. The vehicle will have at least one more axle, typically a front steer axle, but the vehicle can have any number of axles, even more e-axles.

The illustrated truck consists of a chassis frame 24, here shown with just the longitudinal members for clarity, and wheel assemblies 25. The wheel assemblies for a driven rear axle have typically two wheels 13 on each side as a twin configuration, but they might be single wheel configurations as well.

The weight of the vehicle is transferred from the chassis frame 24 through several air bellows 26. The illustrated solution features four air bellows, but it can typically also be two. The air bellows 26 are carried on an air suspension bridge 27 on each side.

A v-stay 28, which is coupled to the chassis frame 24 and the e-axle upper side through joints, holds the e-axle in position lateral and longitudinal. Further there is a so-called stabilink 29 which is similarly coupled at the e-axle lower side. The stabilink 29 holds the e-axle in the longitudinal direction as well as acting as a roll stabiliser. The v-stay 28 and the stabilink 29 also transfer brake and drive forces.

The complete functionality of the suspension as described herein, with air bellows, v-stay and stabilink, may be realized by other solutions known in the industry, and the e-axle geometric layout is indeed optimized to accommodate all known suspension variants.

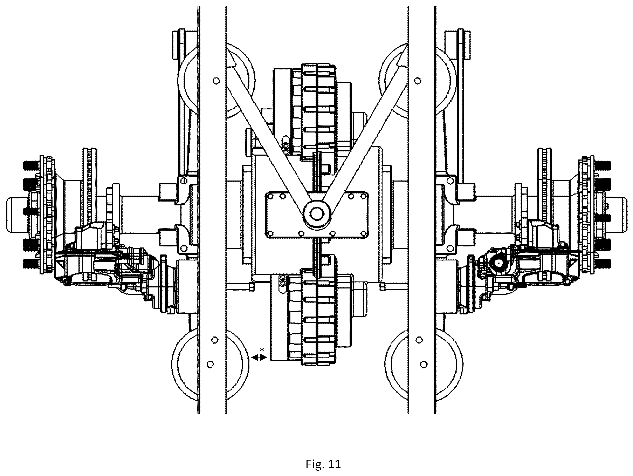

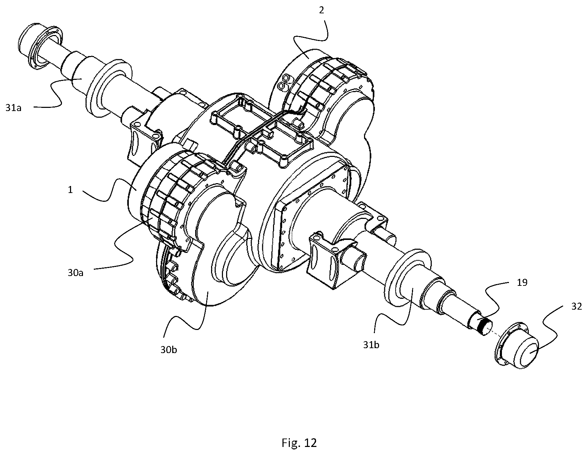

The e-axle features a housing, a front electric motor 2 (i.e. a second electric motor), a rear electric motor 1 (i.e. a first electric motor), a transmission assembly, a planetary gear 12 and a drive shaft 19 (i.e. wheel drive axle). The e-axle housing has a centre housing left 30a (m) and a centre housing right 30b (n), an outer housing left 31a (o) and an outer housing right 31b (o'), see figs. 11 and 12.

A hub drive cup 32 (j), which is bolted to the wheel assembly 25 and have an internal spline which is coupled to the drive shaft 19, transfers torque between the wheel assembly 25 and the drive shaft 19.

A first motor pinion gear 8 and a second motor pinion gear 7 are coupled to the rear electric motor 1. The two pinion gears 8,7 are firmly connected and rotate as one unit. Further both these two pinion gears 8,7 are in constant mesh with a corresponding first gear 11 and second gear 10. The first gears 11 and the second gear 10 are free to rotate on their supporting shafts.

The first motor pinion gear 8 and the first gear 11 provide a first gear set 8,11, and the second motor pinion gear 7 and the second gear 10 provide a second gear set 7,10.

Similarly, a first motor pinion gear 8' and a second motor pinion gear 7' are coupled to the electric rear motor 2, the two pinion gears are in constant mesh with a corresponding first gear 11' and second gear 10'.

The configuration with one motor at the front and one at the rear makes it possible to realize a narrow overall design of the e-axle.

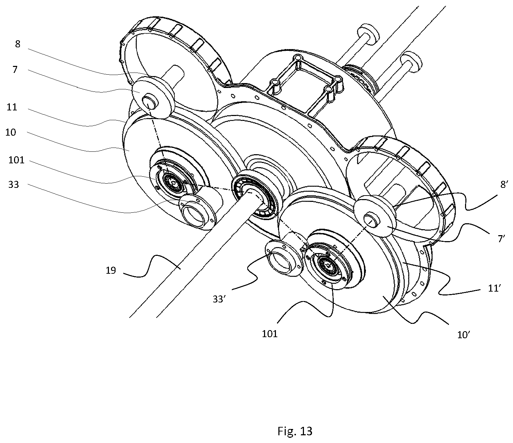

Each of the rear motor 1 and the front motor 2 may be coupled selectively to a corresponding intermediate shaft 23,23' by a shift sleeve assembly 101,101', see fig. 13-16. The intermediate shaft is arranged to provide torque to the sun gear 4 of the planetary gear 12. The shift sleeve assembly 101,101' comprises a sleeve 101a that can be moved between three positions by a linear actuator 33,33'. In an innermost or first position the shift sleeve assembly 101,101' locks the first gear 11,11' to the intermediate shaft 23,23', and in an outermost or second position the shift sleeve assembly 101,101' locks the second gear 10,10' to the intermediate shaft 23,23'. In a neutral mid-position, or third position, of the shift sleeve assembly none of the first and second gears are connected, and the respective rear motor 1 or front motor 2 is disconnected from the intermediate shaft.

This is valid for both front and rear motor, except on the front motor 2 the intermediate shaft 23' is configured to provide a further function as explained below.

The shift sleeve assemblies 101,101' may also be termed clutch assemblies and provides the functionality of clutches 14,15 and 17 described in connection with the first exemplary embodiment.

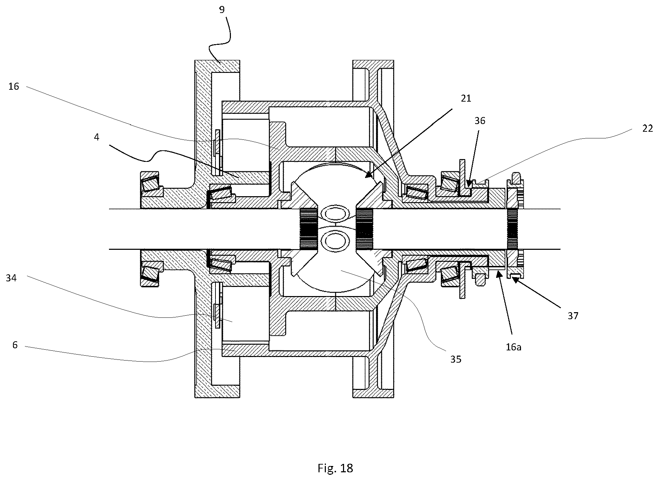

The sun gear 4 of the planetary gear 12 is connected to, or may comprise, an outer gear wheel 9 meshing with the two intermediate shafts 23,23'. In addition, the sun gear features an inner gear wheel which meshes with the planet gears 34, see fig. 18. The number of planet gears may vary. This specific embodiment has five planet gears 34, providing five points of torque transfer from the sun gear 4 through the planet gears 34 to the carrier 16, as well as five points of contact from the planet gears 34 to the ring gear 6. The large number of contact points means that the gears can be made narrower to save space.

The carrier 16 is both the carrier for the planet gears 34 as well as the carrier for the differential gears 35, and as such constitutes an integrated and compact design. The differential functionality including the connection to the drive shaft 19 is well-known in the industry and will not be explained further.

The functionality of shifting the planetary gear 12 between a high and low gear is realized as follows. The ring gear 6 has an outer toothed section coupled to the shift sleeve 22 (i.e. planetary gear clutch). The shift sleeve 22 can be selectively connected to a similarly shaped ring section 16a on the outer end of the carrier 16, in which case a direct ratio, i.e. 1:1, through the planetary gear is established. Alternatively, the shift sleeve 22 can be connected to a similarly shaped ring section 36 which is firmly bolted to the housing, in which case the ring gear 6 cannot rotate and a geared ratio is realized between the sun gear 4 and the carrier 16.

A further innovative feature is shown where a differential lock comprising a sleeve 37 (i.e. a lock sleeve or clutch) with inner teeth coupled to a drive shaft 19 can be selectively brought into contact with the same similarly shaped ring section 16a as mentioned above at the outer end of the carrier 16. This will lock one drive shaft 19 to the carrier 16, by-passing the differential functionality and locking both wheels 13 to the same rpm. This is highly useful if for instance one wheel 13 is on a slippery surface. The feature is a compact and cost-saving way of realizing a differential lock.

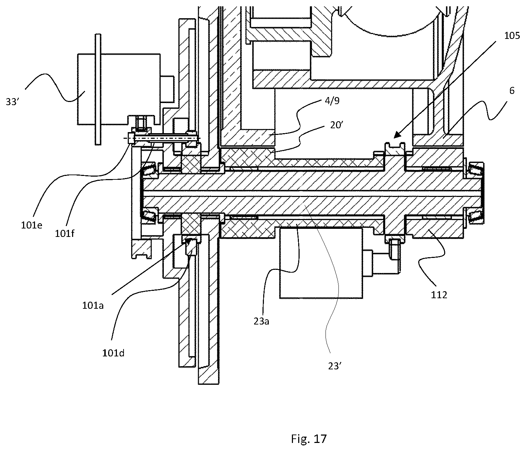

The intermediate shaft 23', to which the front motor 2 can be connected through either the first gear 11' or the second gear 10' as discussed above, comprises a hollow shaft 23a which is firmly connected to the gear 20' and a powersplit gear 112, see fig. 17. The ring gear 6 comprises an inner gear meshing with the planet gears 34 and an outer gear meshing with the powersplit gear 112. The intermediate shaft 23'can be selectively connected either to the hollow shaft 23a meshing with the sun gear 4,9 or to the powersplit gear 112 meshing with the ring gear 6, through a shift sleeve assembly 105. In this way the front motor 2 may either drive the sun gear 4,9, alone or together with the rear motor 1, or it can drive the ring gear 6.

If both electric motors 1,2 drive the sun gear 4 through the first gears 11,11' and the low gear is engaged in the planetary gear 12, then the maximum drive torque can be realized on the wheels 13. On the other hand, if the front motor 2 is driving the ring gear 6 while the rear motor 1 is driving the sun gear 4 then the rpms of the sun gear and the ring gear 6 can be controlled independently. This decoupled rpm control is used during a shift between high and low planetary gear, since at low gear the ring gear 6 should be brought to standstill while at high gear it should have same rpm as the sun gear 4.

Since the torque coming from the two motors 1,2 will be summarized onto the carrier 16 the torque going to the wheels 13 can be maintained during a gear shift in the planetary gear 12.

Different power levels may also be provided from the two motors 1,2 at different rpms, depending on driving situation, hence the term powersplit, and this operating mode may be utilized for an extended time.

The process of shifting gear and the methods to maintain a drive torque to the wheels 13 also during a gear shift will now be explained.

The front motor 2 and the rear motor 1 operate via two different torque paths up until they meet at the sun gear 4,9. This means that the torque transferred to the sun gear 4 is a sum of the torque coming from the two motors 1,2. Thus, if the torque from one motor is reduced it can be compensated by a higher torque from the other motor to keep the torque on the sun gear 4 and hence the torque being ultimately sent to the wheels 13 at a more or less constant value.

To help in realizing the above torque filling a certain aspect of typical electrical motors will be utilized. The torque and power being produced by typical electric motors are limited by the capacity of the motor to dissipate heat coming from the inherent losses in the motor. The produced heat is a result of power produced and the efficiency of the motor to produce that power, as well as the duration of power. To stay under the heat dissipation capacity threshold, a lower power may be produced for a longer time, or a higher power may be produced for a shorter time. During driving a lower power therefore needs to be set, for instance 70% of nominal power, while for a short period (1-2 seconds), e.g. during gear shift, a boosted power greater than 100% of nominal power may be used. A typical boost power level may lay within the range 140% to more than 200% depending on several factors which are beyond the scope of this text.

A gear shift sequence will then be as follows when shifting from the first gears 11,11' to the second gears 10,10' during an acceleration phase of the vehicle.
- The front motor 2 and the rear motor 1 are both connected to the sun gear 4 through the first gears 11,11'. Torque/power is about 70% of nominal, the vehicle is accelerating, and motor rpm is increasing.
- At a defined speed/motor rpm a shift sequence will be initiated by a controller where the power of one motor will be reduced to zero while the power of the other motor will be increased to for instance 140%.
- The torque path with the motor at zero power will shift gear from the first gear 11,11' to the second gear 10,10'. This includes changing the motor rpm to match the related rpm for the second gear 10,10'.
- When the torque path is established for the second gear 10,10', power can again be applied from that motor, while again reducing the power on the other motor. Indeed, the power on the motor connected through the torque path at the first gear 11,11' can be reduced all the way down to zero, while the power of the motor connected to the torque path via the second gear 10,10' can be brought up to 140%.
- Now the other torque path can also be shifted from the first gear 11,11' to the second gear 10,10'.
- When both torque paths are in the second gear 10,10' power can again be set at 70% from each motor.

As described above a gear shift from the first gears 11,11' to the second gears 10,10' can be realized with maintained torque on the wheels 13. Although the torque through the gear shift is described to be kept at the same level it does not have to be. The power can be set to vary through the gear shift depending on the dynamics of the system and it will be optimized based on tuning of the actual system as a whole. This again is made possible by the fact that we have two independent torque paths which can be individually controlled.

The planetary gear 12 which is coupled in series and after the above explained transmission assembly acts as a summary device of the two torque paths upstream. The two gears in the planetary gear have a rather big difference in ratio and will be called high (i.e. the fourth gear ratio, see description of fig. 1) and low (i.e. the third gear ratio) as they act as a range gear. To calculate the total gears of the e-axle the gears realized by the first gear 11,11' and the second gear 10.10' are multiplied with the two gears in the planetary gear 12, giving a total of four different gears, with two gears in the low range and two gears in the high range.

The ninth exemplary powertrain is configured to allow powershift between the high and low gear of the planetary gear. The steps for performing such a powershift is described further below. However, the powertrain may also perform a simple gear shift between the high and low gear without powershift, similar to a gear shift performed by the embodiments wherein both motors 1,2 are only connectable to the sun gear 4.

A simple gear shift from the second gear to the third gear of the e-axle, i.e. without powershift, during an acceleration phase of the vehicle may be performed by the following steps.
- Having the e-axle running both motors 1,2 via the second gears 10,10' and the low gear of the planetary gear 12 (may be considered the second gear of the total four gears of the e-axle). In the low gear, the ring gear 6 is stationary while the sun gear 4 rotates at high rpm. The carrier 16 and hence the wheels 13 are moving at relatively low rpm/low speed. The rpm difference between the sun gear 4 and the carrier 16 is based on the planetary gear ratio.
- When a certain speed/motor rpm is reached a gear shift sequence is initiated by a controller to shift the planetary gear to the high gear.
- Both motors 1,2 are set to zero torque/power, the shift sleeve 22 is moved from an inner position where it locks the ring gear 6 to the housing via the ring section 36, and into a mid-position where the ring gear 6 is free to rotate controlled by the rotation of the sun gear and the carrier.
- The rpm of both motors 1,2 is then reduced. Since the rpm of the carrier 16 is linked to the rpm of the wheels 13 and is thus more or less constant during the gear shift sequence, the ring gear 6 will start to rotate as a result of the reduced rpm of the sun gear 4.
- At a certain rpm of the sun gear/certain rpm of motors, the ring gear 6 will have a speed which is equal to the sun gear 4, at this point in time the shift sleeve 22 is moved from the mid-position to the outer position where it locks the ring gear 6 to the sun gear 4, hence locking the planetary gear 12 to rotate as one unit in a 1:1 ratio.
- Both motors are shifted from the second gears 10,10' to the first gears 11,11'. The shift can be done simultaneously on both torque paths or in sequence as long as the rpms are matched with the gears to be connected.
- The upstream transmission assembly connects both motors 1,2 to the sun gear 4 via the first gears 11,11' and the planetary gear 12 is in the high gear.

The above gear shift sequence may be seen as providing a shift from the second gear to the third gear of the e-axle if such a nomenclature is chosen.

In the following a shift sequence utilizing powershift between the low and high gear of the planetary gear will be explained.

As discussed above, the front motor 2 is interfacing with the planetary gear 12 selectively through the intermediate shaft 23' and either of the hollow shaft 23a and the powersplit gear 112. Preferably the ratio between the two ways of connecting to the planetary gear is equal, meaning that the diameter of the part of the ring gear 6 and diameter of the part of the sun gear 4 interfacing the front motor torque path is equal.

During a shift from the second gear to the third gear of the e-axle during an acceleration phase of the vehicle the following shift sequence may be used.
- In the second gear of the e-axle both motors 1,2 run via the second gears 10,10' and the low gear of the planetary gear 12. The ring gear 6 is stationary while the sun gear 4 moves at high rpm. The carrier 16 and thus the wheels 13 are moving at relatively low rpm/low speed. This rpm difference is based on the planetary gear ratio.
- When a certain speed/motor rpm is reached, a shift sequence is initiated by a controller to shift into the third gear of the e-axle.
- The front motor 2 is set to zero power, while the rear motor 1 is set to 140% boost power. Torque to the wheels is thus maintained.
- The shift sleeve assembly 105 is moved from an inner position where it connects the intermediate shaft 23' to the hollow shaft 23a, and hence the sun gear 4, and to a mid-position where the front motor 2 is decoupled from the planetary gear.
- When the front motor 2 is brought to more or less standstill, the shift sleeve assembly 105 is moved from a mid-position to an outer position where it connects the intermediate shaft 23' to the powersplit gear 112 to mesh with the stationary ring gear 6.
- The torque path connected to the front motor 2 is now shifted from the second gear 10' to the first gear 11', this is preferably done by a slight rotation of the motor in order for the teeth of the shift sleeve assembly 101 to find its corresponding slot in the adjacent part.
- The torque of the front motor 2 is increased to equal the holding torque of the ring gear 6, resulting in the remaining torque between the shift sleeve 22 and the stationary teeth in the housing will be close to zero and the shift sleeve 22 can move from an inner position where it locks the ring gear 6 to the housing and into a mid-position where the ring gear 6 is free to rotate controlled by the rotation of the sun gear and the carrier.
- The rpm of the ring gear 6 is gradually increased while the rpm of the rear motor 1 is gradually reduced, maintaining the rpm of the carrier 16 (carrier rpm is governed by wheel speed).
- The planetary gear 12 is in a state of powersplit where the power going into the planetary gear is split between the two motors 1,2 and the sum of power is carried out by the carrier 16.
- At a certain rpm of the sun gear 4 and/or the motors, the ring gear 6 will have a speed which is equal to the sun gear 4, at this point in time the shift sleeve 22 will move from the mid-position to the outer position where it locks the ring gear 6 to the sun gear 4, hence locking the planetary gear 12 to rotate as one unit in a 1:1 ratio.
- The power of the front motor 2 is increased to a boost power of 140% while the rear motor 1 is reduced to zero power. Torque to the wheels is thus maintained.
- The torque path connected to the rear motor 1 is now shifted from the second gear 10 to the first gear 11 by adapting the rpm of the motor so that it fits gear 11.
- The upstream transmission assembly are now connected with motor 1 to the sun gear 4 via the first gear and with motor 2 to the ring gear 6 via the first gear and the planetary gear 12 is in the high gear, i.e. the third gear of the e-axle.
- Both electric motors 1,2 can be set to for instance 70% power, or whatever power is required by the driving situation.

The above gear shift sequence may be seen as providing a shift from the second gear to the third gear of the e-axle if such a nomenclature is chosen

Likewise, a shift from the third gear to the second gear of the e-axle during for instance an uphill downshift is described using the powershift feature where the following shift sequence may be used, starting from the end state as described directly above:
- In the third gear of the e-axle both motors 1,2 run at 70% power via the first gears 11,11' and the high gear of the planetary gear 12. The ring gear 6 is locked to rotate with the same speed as the sun gear 4 in a direct 1:1 ratio, vehicle speed is gradually reducing due to the steep incline.
- When a certain speed/motor rpm is reached, a shift sequence is initiated by a controller to shift into the second gear of the e-axle.
- The torque of the rear motor 1 is set to 0 and the torque of the front motor 2 is set to 140% boost torque.
- The torque path connecting the sun gear 4 to the rear motor 1 is shifted from first gear 11 to second gear 10
- Torque on the rear motor 1 is re-established to a relatively high level
- The torque of the front motor 2 is balanced to equal the torque from the rear motor 1 as seen at the teeth of the planetary gear sleeve 22, taking into account the ratios between the gears 7/10, gears 9/20 and the gears 111/112, so that zero torque is seen at the teeth of the planetary gear sleeve 22.
- Now the shift sleeve 22 will move from the outer position to the mid-position where the ring gear 6 may rotate at a different speed than the carrier 16.
- The rpm of the ring gear 6 is gradually reduced while the rpm of the rear motor 1 is gradually increased by applying the relevant torque from the two motors, maintaining the rpm of the carrier 16 (carrier rpm is governed by wheel speed).
- The planetary gear 12 is in a state of powersplit where the power going into the planetary gear is split between the two motors 1,2 and the sum of power is carried out by the carrier 16
- At a certain rpm of the sun gear 4 the ring gear 6 will have a speed which is zero or in other words at standstill, at this point in time the shift sleeve 22 will move from the mid-position to the inner position where it locks the ring gear 6 to the housing, hence locking the ring gear 6 to be stationary.
- The rear motor 1 is set to 140% boost torque, while the front motor 2 is set to 0 torque
- The torque path connecting the sun gear 4 to the front motor 2 is shifted from the first gear 11' to the second gear 10', this is preferably done by a slight rotation of the motor in order for the teeth of the shift sleeve assembly 101 to find its corresponding slot in the adjacent part
- The shift sleeve assembly 105 is moved from an outer position where it connects the intermediate shaft 23' to the powershift gear 112, and hence the ring gear 6, and to a mid-position where the front motor 2 is decoupled from the planetary gear.
- Speed of the front motor 2 is increased until the speed of the intermediate shaft 23' more or less matches the speed of the hollow shaft 23a or in other words gear 20, the shift sleeve assembly 105 is moved from a mid-position to an inner position where it connects the intermediate shaft 23' to hollow shaft 23a or in other words gear 20 and hence to the sun gear 4.
- Now both motors 1,2 drive the sun gear 4 through the second gears 10,10' in the transmission assembly while the planetary is in the low gear
- Both electric motors 1,2 can be set to for instance 70% power, or whatever power is required by the driving situation.

The above gear shift sequence may be seen as providing a shift from the third gear to the second gear of the e-axle if such a nomenclature is chosen.

The methods above describe shifting between different gears in a system with 2 gearboxes (i.e. the transmission assembly and the planetary gear) coupled in series with each other by operating a plurality of clutches of the mechanical type between different states, and where the shift from one state to another is relying on control of the rpm and torque over the clutches. To make sure that this is done in a controlled manner every shift of clutch state is done at a situation where one side of the clutch is coupled to the wheel and the other side coupled to the motor. In other words, the method makes sure that only one clutch in a torque path may be opened at the same time. Further an rpm difference over the clutches is set to make sure that the teeth engagement is not prevented by two teeth butting against each other, but that the teeth slide into an opening in the adjacent part of the clutch, to this effect a rpm difference of around 10 rpm is set.

Yet another innovative aspect of the shown configuration is related to the design of the shift sleeve assembly 101 and 101'. The design is related to the critical dimension (*) which describes the available space transversal to the truck frame, see fig. 11.

The two gears 10/10' and 11/11' (i.e. gear wheels) are placed directly adjacent to each other with just a minimal gap between. Still there need to be a shift device in between to selectively connect the gears to the shaft 23, and the shift device needs to be accessible and operable.

To realize this a novel shift/clutch device is disclosed. **In** the shift device, an outside shift sleeve 101b which is coupled to a shift fork 101c is arranged on one side of the gears, not between the gears as is common. An inside sleeve is arranged between the gears 10/10' and 11/11'. The inside sleeve 101a has teeth on the inside in constant mesh with corresponding teeth on the shaft 23 and selectively being brought to couple with either of the gears 10/10' and 11/11'. A groove section on the outside of the inside sleeve 101a can be used to move the sleeve back and forth axially. A slider section 101d is installed in the groove. The slider section 101d is in the shape of a ring that fits the groove with minor gaps for clearance. For assembly the ring could be made of two half-circles.

Note that the sleeve 101a will always follow the rpm of the shaft 23 given the constant mesh therebetween.

From the outside sleeve 101b coupled to the fork 101c to the inside sleeve 101a there are a plurality of screws 101e. The screws 101e are firmly bolted to the slider section over tubes 101f and with clearance holes through gear 10/10' for the tubes 101f. Note that the outside sleeve 101b, the bolts 101e, the tubes 101f and the slider ring 101d all rotate with the gear 10/10', and that there may or may not be a rpm difference between the inside sleeve 101a and the slider ring 101d.

When the linear actuator 33 is moving the fork 101c and hence the outside sleeve 101b, the inside sleeve 101a is forced to follow in axial direction, but it is free to rotate in relation to the slider ring 101d.

In this way a shift device is created where the two gears 10/10' and 11/11' that is shifted between can be installed virtually adjacent with minimal gap so that the required axial build space is as small as possible.

Yet another innovative aspect of the shown configuration is related to the specific layout of the different axis in relation to each other to create space for installing various necessary vehicle components for the complete integration of the e-axle in a vehicle. The specific components are exemplified by the v-stay 28, the stabilink 29 and an additional stabiliser 120. The specific layout can be seen on fig. 13 by following the centrelines through the axis as seen transversally in the vehicle and which has the shape of a W where the rear and front upwards pointing legs of the W is considerably higher than the mid upwards pointing section of the W, which allows space for the v-stay to be mounted on the mid-section of the e-axle as well as utilizing the space between the legs of the v-stay for the space requiring electric motor(s). Further the space created between the rear and front downward pointing section of the W is utilized to make space for any stabilisers or stabilinks as indicated by arrows 121, this is an advantageous feature for maintaining a good ground clearance.

Further, the shown layout consists of a plurality of rolling bearings placed and sized to accommodate the different rpms at different places and the forces acting there. The type of bearings, number of bearings and their placement may be changed or modified. Further there is a need to install various sealings around rotating shafts etc, these are not shown for clarity as they do not impact the innovative features.

## Claims

1. A powertrain comprising a first electric motor (1), a second electric motor (2), a transmission assembly, a planetary gear (12) and a wheel drive axle (19), wherein
the transmission assembly comprises a first input (5) connected to the first electric motor (1), a second input (3) connected to the second electric motor, and at least a first output (9) to which both the first electric motor (1) and the second electric motor (2) may provide torque, wherein
the first input (5) is connectable to the first output (9) by a plurality of gear sets (7,10,8,11) being selectable by a first clutch assembly (15,17,101), and
the second input (3) is connectable to the first output (9) by a plurality of gear sets (7,10,8,11) being selectable by a second clutch assembly (14,17,101'), to provide at least two gear ratios between the first output (9) and each of the first input (5) and the second input (3), wherein the gear sets and clutch assemblies are configured to allow a change between the two gear ratios without torque interrupt; and
the planetary gear (12) comprises a sun gear (4), a ring gear (6) and a carrier (16), the carrier (16) is connected to the wheel drive axle (19) and the planetary gear (12) is shiftable between a first gear state, a second gear state and a third gear state, in the first gear state the ring gear (6) is kept rotationally stationary to provide a highest possible inherent gear ratio between the carrier (16) and the sun gear (4), in the second gear state a rotational speed of the ring gear (6) depends on the rotation of both the sun gear (4) and the carrier (16), and in the third gear state any two of the ring gear (6), the sun gear (4) and the carrier are kept rotationally constant to each other to provide a 1:1 gear ratio between the sun gear (4) and the carrier (16); and
the first output (9) of the transmission assembly is coupled to the sun gear (4).

2. A powertrain according to claim 1, wherein the transmission assembly comprises a second output (107,112) connectable to the second electric motor (2), the second output being coupled to the ring gear (6) or the carrier (16).

3. A powertrain according to claim 2, wherein the transmission assembly comprises a third clutch assembly (105,109) configured to couple the second output (107,112) and the second electric motor (2) such that torque and rotation may be transferred from the second electric motor (2) to the ring gear (6) or the carrier (16).

4. A powertrain according to any of the preceding claims, comprising a planetary clutch (22) for controlling a shift between the first gear state, the second gear state and the third gear state.

5. A powertrain according to any of claims 2-4, wherein a shift between the first gear state, the second gear state and the third gear state can be controlled through torque and speed applied to the sun gear (4) through the first output and to the ring gear (6) through the second output.

6. A powertrain according to claim 3, wherein any of the second clutch assembly (14,17) and the third clutch assembly (105) is configured to selectively disconnect the second electric motor (2) from the first output (9).

7. A powertrain according to any of the preceding claims, wherein the first electric motor (1) and the second electric motor (2) may be decoupled from the first output (9) by operating the first clutch assembly (15,17,101) and the second clutch assembly (14,17,101'), respectively.

8. A powertrain according to any of the preceding claims, wherein the carrier (16) and wheel drive axle (19) are co-axial.

9. A powertrain according to any of the preceding claims, wherein the first electric motor (1) and the second electric motor (2) comprise a first drive shaft (5') and a second drive shaft (3'), respectively, the first and second drive shafts are parallel to, and positioned on opposite sides of, a centreline of the planetary gear.

10. A powertrain according to any of the preceding claims, wherein the first input (5) is operably connectable to the sun gear (4) via any of a first torque path and a second torque path, and the second input (3) is operably connectable to the sun gear (4) via any of a third torque path and a fourth torque path, the first and third torque path providing a first gear ratio, and the second and fourth torque path providing a second gear ratio.

11. A powertrain according to claims 2 and 10, wherein the second input (3) is operably connectable to the ring gear (6) or the carrier (16) via a fifth torque path.

12. A powertrain according to any of claims 11 and 12, wherein the first, second, third and fourth torque paths are operably connectable to the sun gear (4) via a common gear (9).

13. A powertrain according to any of the preceding claims, wherein the carrier (16) is connected to the wheel drive axle 19 via a differential 21.

14. A vehicle comprising a powertrain according to any of claims 1-13.

15. A method of shifting gears in a powertrain according to any of claims 1-13, the method comprising the steps of:
- opening at least one clutch of the first clutch assembly (15,17,101) in a complete torque path extending from the first motor (1) to the wheel drive axle (19) to decouple an initially connected first gear set (7,10);
- adjusting the rpm of the first motor (1) so that the rpm fits a second gear set (8,11) connected to the at least one clutch of the first clutch assembly;
- closing the at least one clutch of the first clutch assembly to connect the second gear set (8,11) to the first motor (1);
- opening at least one clutch of the second clutch assembly (14,17,101') in a complete torque path extending from the second motor (2) to the wheel drive axle (19) to decouple an initially connected first gear set (7/7',10/10');
- adjusting the rpm of the second motor (2) so that the rpm fits a second gear set (8/8',11/11') connected to the second clutch; and
- closing the at least one clutch of the second clutch assembly (14,17,101') to connect the second gear set (8/8',11/11') to the second motor (2).

## Patentansprüche

1. Antriebsstrang, umfassend einen ersten Elektromotor (1), einen zweiten Elektromotor (2), eine Übertragungsbaugruppe, ein Planetengetriebe (12) und eine Radantriebsachse (19),
wobei
die Übertragungsbaugruppe einen ersten Eingang (5), der mit dem ersten Elektromotor (1) verbunden ist, einen zweiten Eingang (3), der mit dem zweiten Elektromotor verbunden ist, und zumindest einen ersten Ausgang (9) umfasst, an dem sowohl der erste Elektromotor (1) als auch der zweite Elektromotor (2) Drehmoment bereitstellen können, wobei
der erste Eingang (5) mit dem ersten Ausgang (9) durch eine Vielzahl von Getriebesätzen (7,10,8,11) verbindbar ist, die durch eine erste Kupplungsbaugruppe (15,17,101) auswählbar sind, und
der zweite Eingang (3) mit dem ersten Ausgang (9) durch eine Vielzahl von Getriebesätzen (7,10,8,11) verbindbar ist, die durch eine zweite Kupplungsbaugruppe (14,17,101') auswählbar sind, um zumindest zwei Getriebeverhältnisse zwischen dem ersten Ausgang (9) und jedem von dem ersten Eingang (5) und dem zweiten Eingang (3) bereitzustellen, wobei die Getriebesätze und Kupplungsanordnungen dazu konfiguriert sind, einen Wechsel zwischen den zwei Getriebeverhältnissen ohne Drehmomentunterbrechung zu ermöglichen; und
das Planetengetriebe (12) ein Sonnengetriebe (4), ein Hohlgetriebe (6) und einen Träger (16) umfasst, der Träger (16) mit der Radantriebsachse (19) verbunden ist und das Planetengetriebe (12) zwischen einem ersten Getriebezustand, einem zweiten Getriebezustand und einem dritten Getriebezustand schaltbar ist, in dem ersten Getriebezustand das Hohlgetriebe (6) drehfest gehalten wird, um ein höchstmögliches inhärentes Getriebeverhältnis zwischen dem Träger (16) und dem Sonnengetriebe (4) bereitzustellen, in dem zweiten Getriebezustand eine Drehgeschwindigkeit des Hohlgetriebes (6) von der Drehung sowohl des Sonnengetriebes (4) als auch des Trägers (16) abhängt und in dem dritten Getriebezustand beliebige zwei von dem Hohlgetriebe (6), dem Sonnengetriebe (4) und dem Träger drehkonstant zueinander gehalten werden, um ein 1:1-Getriebeverhältnis zwischen dem Sonnengetriebe (4) und dem Träger (16) bereitzustellen; und
der erste Ausgang (9) der Übertragungsbaugruppe an das Sonnengetriebe (4) gekoppelt ist.

2. Antriebsstrang nach Anspruch 1, wobei die Übertragungsbaugruppe einen zweiten Ausgang (107,112) umfasst, der mit dem zweiten Elektromotor (2) verbindbar ist, wobei der zweite Ausgang an das Hohlgetriebe (6) oder den Träger (16) gekoppelt ist.

3. Antriebsstrang nach Anspruch 2, wobei die Übertragungsbaugruppe eine dritte Kupplungsbaugruppe (105,109) umfasst, die dazu konfiguriert ist, den zweiten Ausgang (107,112) und den zweiten Elektromotor (2) zu koppeln, sodass Drehmoment und Drehung von dem zweiten Elektromotor (2) auf das Hohlgetriebe (6) oder den Träger (16) übermittelt werden können.

4. Antriebsstrang nach einem der vorhergehenden Ansprüche, umfassend eine Planetenkupplung (22) zum Steuern einer Schaltung zwischen dem ersten Getriebezustand, dem zweiten Getriebezustand und dem dritten Getriebezustand.

5. Antriebsstrang nach einem der Ansprüche 2-4, wobei eine Schaltung zwischen dem ersten Getriebezustand, dem zweiten Getriebezustand und dem dritten Getriebezustand durch Drehmoment und Geschwindigkeit gesteuert werden kann, die auf das Sonnengetriebe (4) durch den ersten Ausgang und auf das Hohlgetriebe (6) durch den zweiten Ausgang aufgebracht werden.

6. Antriebsstrang nach Anspruch 3, wobei eine beliebige von der zweiten Kupplungsbaugruppe (14,17) und der dritten Kupplungsbaugruppe (105) dazu konfiguriert ist, den zweiten Elektromotor (2) selektiv von dem ersten Ausgang (9) zu trennen.

7. Antriebsstrang nach einem der vorhergehenden Ansprüche, wobei der erste Elektromotor (1) und der zweite Elektromotor (2) von dem ersten Ausgang (9) jeweils durch Betätigen der ersten Kupplungsbaugruppe (15,17,101) und der zweiten Kupplungsbaugruppe (14,17,101') entkoppelt werden können.

8. Antriebsstrang nach einem der vorhergehenden Ansprüche, wobei der Träger (16) und die Radantriebsachse (19) koaxial sind.

9. Antriebsstrang nach einem der vorhergehenden Ansprüche, wobei der erste Elektromotor (1) und der zweite Elektromotor (2) jeweils eine erste Antriebswelle (5') und eine zweite Antriebswelle (3') umfassen, wobei die erste und die zweite Antriebswelle parallel zu und auf gegenüberliegenden Seiten von einer Mittellinie des Planetengetriebes positioniert sind.

10. Antriebsstrang nach einem der vorhergehenden Ansprüche, wobei der erste Eingang (5) mit dem Sonnengetriebe (4) über einen beliebigen von einem ersten Drehmomentweg und einem zweiten Drehmomentweg wirkverbindbar ist und der zweite Eingang (3) mit dem Sonnengetriebe (4) über einen beliebigen von einem dritten Drehmomentweg und einem vierten Drehmomentweg wirkverbindbar ist, wobei der erste und der dritte Drehmomentweg ein erstes Getriebeverhältnis bereitstellen und der zweite und der vierte Drehmomentweg ein zweites Getriebeverhältnis bereitstellen.

11. Antriebsstrang nach Anspruch 2 und 10, wobei der zweite Eingang (3) mit dem Hohlgetriebe (6) oder dem Träger (16) über einen fünften Drehmomentweg wirkverbindbar ist.

12. Antriebsstrang nach einem der Ansprüche 11 und 12, wobei der erste, der zweite, der dritte und der vierte Drehmomentweg mit dem Sonnengetriebe (4) über ein gemeinsames Getriebe (9) wirkverbindbar sind.

13. Antriebsstrang nach einem der vorhergehenden Ansprüche, wobei der Träger (16) mit der Radantriebsachse (19) über ein Differential (21) verbunden ist.

14. Fahrzeug, umfassend einen Antriebsstrang nach einem der Ansprüche 1-13.

15. Verfahren zum Schalten von Getrieben in einem Antriebsstrang nach einem der Ansprüche 1-13, wobei das Verfahren die folgenden Schritte umfasst:
- Öffnen von zumindest einer Kupplung der ersten Kupplungsbaugruppe (15,17,101) in einem vollständigen Drehmomentweg, der sich von dem ersten Elektromotor (1) zu der Radantriebsachse (19) erstreckt, um einen anfänglich verbundenen ersten Getriebesatz (7,10) zu entkoppeln;
- Einstellen der U/min des ersten Motors (1), sodass die U/min zu einem zweiten Getriebesatz (8,11) passt, der mit der zumindest einen Kupplung der ersten Kupplungsbaugruppe verbunden ist;
- Schließen der zumindest einen Kupplung der ersten Kupplungsbaugruppe, um den zweiten Getriebesatz (8,11) mit dem ersten Motor (1) zu verbinden;
- Öffnen von zumindest einer Kupplung der zweiten Kupplungsbaugruppe (14,17,101') in einem vollständigen Drehmomentweg, der sich von dem zweiten Motor (2) zu der Radantriebsachse (19) erstreckt, um einen anfänglich verbundenen ersten Getriebesatz (7/7',10/10') zu entkoppeln;
- Einstellen der U/min des zweiten Motors (2), sodass die U/min zu einem zweiten Getriebesatz (8/8',11/11') passt, der mit der zweiten Kupplung verbunden ist; und
- Schließen der zumindest einen Kupplung der zweiten Kupplungsbaugruppe (14,17,101'), um den zweiten Getriebesatz (8/8', 11/11') mit dem zweiten Motor (2) zu verbinden.

## Revendications

1. Groupe motopropulseur comprenant un premier moteur électrique (1), un second moteur électrique (2), un ensemble de transmission, un satellite (12) et un axe d'entraînement de roue (19), dans lequel
l'ensemble de transmission comprend une première entrée (5) reliée au premier moteur électrique (1), une seconde entrée (3) reliée au second moteur électrique, et au moins une première sortie (9) à laquelle le premier moteur électrique (1) et le second moteur électrique (2) peuvent fournir un couple, dans lequel
la première entrée (5) peut être reliée à la première sortie (9) par une pluralité de trains d'engrenages (7,10,8,11) pouvant être sélectionnés par un premier ensemble d'embrayage (15,17,101), et
la seconde entrée (3) peut être reliée à la première sortie (9) par une pluralité de trains d'engrenages (7,10,8,11) pouvant être sélectionnés par un second ensemble d'embrayage (14,17,101'), pour fournir au moins deux rapports d'engrenage entre la première sortie (9) et chacune de la première entrée (5) et de la seconde entrée (3), dans lequel les trains d'engrenages et les ensembles d'embrayage sont conçus pour permettre une fluctuation entre les deux rapports d'engrenage sans interruption de couple ; et
le satellite (12) comprend un planétaire (4), une couronne (6) et un support (16), le support (16) étant relié à l'axe d'entraînement de roue (19) et le satellite (12) pouvant être déplacé entre un premier état de vitesse, un deuxième état de vitesse et un troisième état de vitesse, dans le premier état de vitesse, la couronne (6) est maintenue immobile en rotation pour fournir un rapport d'engrenage inhérent le plus élevé possible entre le support (16) et le planétaire (4), dans le deuxième état de vitesse, une vitesse de rotation de la couronne (6) dépend de la rotation à la fois du planétaire (4) et du support (16), et dans le troisième état de vitesse, deux éléments quelconques parmi la couronne (6), le planétaire (4) et le support sont maintenus constants en rotation l'un par rapport à l'autre pour fournir un rapport d'engrenage de 1:1 entre le planétaire (4) et le support (16) ; et
la première sortie (9) de l'ensemble de transmission est couplée au planétaire (4).

2. Groupe motopropulseur selon la revendication 1, dans lequel l'ensemble de transmission comprend une seconde sortie (107,112) pouvant être reliée au second moteur électrique (2), la seconde sortie étant couplée à la couronne (6) ou au support (16).

3. Groupe motopropulseur selon la revendication 2, dans lequel l'ensemble de transmission comprend un troisième ensemble d'embrayage (105,109) conçu pour coupler la seconde sortie (107,112) et le second moteur électrique (2) de sorte qu'un couple et une rotation puissent être transférés du second moteur électrique (2) à la couronne (6) ou au support (16).

4. Groupe motopropulseur selon l'une quelconque des revendications précédentes, comprenant un embrayage de satellite (22) destiné à commander un changement entre le premier état de vitesse, le deuxième état de vitesse et le troisième état de vitesse.

5. Groupe motopropulseur selon l'une quelconque des revendications 2 à 4, dans lequel un changement entre le premier état de vitesse, le deuxième état de vitesse et le troisième état de vitesse peut être commandé par un couple et une vitesse appliqués au planétaire (4) au travers de la première sortie et à la couronne (6) au travers de la seconde sortie.

6. Groupe motopropulseur selon la revendication 3, dans lequel l'un quelconque du second ensemble d'embrayage (14,17) et du troisième ensemble d'embrayage (105) est conçu pour détacher sélectivement le second moteur électrique (2) de la première sortie (9).

7. Groupe motopropulseur selon l'une quelconque des revendications précédentes, dans lequel le premier moteur électrique (1) et le second moteur électrique (2) peuvent être découplés de la première sortie (9) en actionnant le premier ensemble d'embrayage (15,17,101) et le second ensemble d'embrayage (14,17,101'), respectivement.

8. Groupe motopropulseur selon l'une quelconque des revendications précédentes, dans lequel le support (16) et l'axe d'entraînement de roue (19) sont coaxiaux.

9. Groupe motopropulseur selon l'une quelconque des revendications précédentes, dans lequel le premier moteur électrique (1) et le second moteur électrique (2) comprennent un premier arbre d'entraînement (5') et un second arbre d'entraînement (3'), respectivement, les premier et second arbres d'entraînement sont parallèles à un axe central du satellite et positionnés sur des côtés opposés de celui-ci.

10. Groupe motopropulseur selon l'une quelconque des revendications précédentes, dans lequel la première entrée (5) peut être reliée fonctionnellement au planétaire (4) par l'intermédiaire de l'un quelconque d'un premier trajet de couple et d'un deuxième trajet de couple, et la seconde entrée (3) peut être reliée fonctionnellement au planétaire (4) par l'intermédiaire de l'un quelconque d'un troisième trajet de couple et d'un quatrième trajet de couple, le premier et le troisième trajet de couple fournissant un premier rapport d'engrenage, et le deuxième et le quatrième trajet de couple fournissant un second rapport d'engrenage.

11. Groupe motopropulseur selon les revendications 2 et 10, dans lequel la seconde entrée (3) peut être reliée fonctionnellement à la couronne (6) ou au support (16) par l'intermédiaire d'un cinquième trajet de couple.

12. Groupe motopropulseur selon l'une quelconque des revendications 11 et 12, dans lequel les premier, deuxième, troisième et quatrième trajets de couple peuvent être reliés fonctionnellement au planétaire (4) par l'intermédiaire d'un engrenage commun (9).

13. Groupe motopropulseur selon l'une quelconque des revendications précédentes, dans lequel le support (16) est relié à l'axe d'entraînement de roue (19) par l'intermédiaire d'un différentiel (21).

14. Véhicule comprenant un groupe motopropulseur selon l'une quelconque des revendications 1 à 13.

15. Procédé de changement de vitesse dans un groupe motopropulseur selon l'une quelconque des revendications 1 à 13, le procédé comprenant les étapes de :
- ouverture d'au moins un embrayage du premier ensemble d'embrayage (15,17,101) dans un trajet de couple complet s'étendant du premier moteur (1) à l'axe d'entraînement de roue (19) pour découpler un premier train d'engrenages (7,10) initialement relié ;
- réglage du régime du premier moteur (1) afin que le régime s'adapte à un second train d'engrenages (8,11) relié à l'au moins un embrayage du premier ensemble d'embrayage ;
- fermeture de l'au moins un embrayage du premier ensemble d'embrayage pour relier le second train d'engrenages (8,11) au premier moteur (1) ;
- ouverture d'au moins un embrayage du second ensemble d'embrayage (14,17,101') dans un trajet de couple complet s'étendant du second moteur (2) à l'axe d'entraînement de roue (19) pour découpler un premier train d'engrenages (7/7',10/10') initialement relié ;
- réglage du régime du second moteur (2) afin que le régime s'adapte à un second train d'engrenages (8/8',11/11') relié au deuxième embrayage ; et
- fermeture de l'au moins un embrayage du second ensemble d'embrayage (14,17,101') pour relier le second train d'engrenages (8/8',11/11') au second moteur (2).
